(19) Europäisches Patentamt / European Patent Office / Office européen des brevets

(11) **EP 3 386 129 B1**

(12) **EUROPEAN PATENT SPECIFICATION**

(45) Date of publication and mention
of the grant of the patent:
**19.06.2019 Bulletin 2019/25**

(51) Int Cl.:
**H04J 14/02** *(2006.01)*    **H04L 12/70** *(2013.01)*

(21) Application number: **17305404.0**

(22) Date of filing: **04.04.2017**

(54) **OPTICAL NODE AND NETWORK WITH REDUCED LATENCY**

OPTISCHER KNOTEN UND NETZWERK MIT REDUZIERTER LATENZ

NOEUD OPTIQUE ET RÉSEAU AYANT UNE LATENCE RÉDUITE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**10.10.2018 Bulletin 2018/41**

(73) Proprietor: **Nokia Solutions and Networks Oy**
**02610 Espoo (FI)**

(72) Inventors:
 • **USCUMLIC, Bogdan**
**91620 Nozay (FR)**
 • **DUTISSEUIL, Eric**
**91620 Nozay (FR)**

(74) Representative: **Nokia EPO representatives**
**Nokia Technologies Oy**
**Karaportti 3**
**02610 Espoo (FI)**

(56) References cited:
**EP-A1- 2 648 352    EP-A1- 2 747 324**
**EP-A2- 0 294 133**

**Description**

**Field of the invention**

The invention relates to the technical field of optically transparent communications networks employing a packet granularity in particular for data center.

**Background**

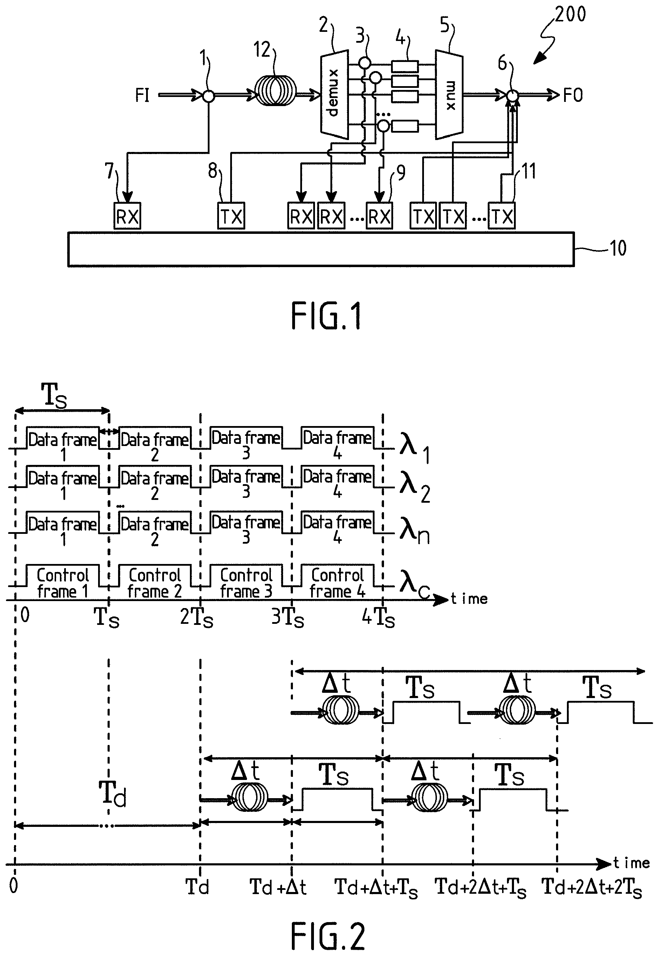

A node 200 for an optical transmission network according to the prior art is schematically depicted in figure 1. The optical node receives and transmits a wavelength-division multiplexing (WDM) signal at its ports. The WDM signal has a synchronous multi-wavelength packet format. The WDM line signal has a number of n data wavelength channels $\lambda_1$-$\lambda_n$ (hereinafter called data channels) plus one control wavelength channel $\lambda_c$ (hereinafter called control channel). All data channels $\lambda_1$-$\lambda_n$ as well as the control channel $\lambda_c$ are structured into equidistant timeslots of equal duration $T_s$, synchronized over all wavelengths. Each data channel carries one packet per timeslot. The corresponding timeslot of the control channel carries the packet headers of all data packets.

The WDM waveband demultiplexer 2 is optically connected to a WDM waveband multiplexer 5.

The control channel $\lambda_c$ is systematically extracted and electronically processed at each node. The packet headers carried by the control channel $\lambda_c$ on a time slot $t_i$ will be used to calculate the scheduling decision that relates to the data packet carried on the data channels $\lambda_1$-$\lambda_n$ on the same time slot $t_i$.

Before the WDM signal from fiber input enters WDM waveband demultiplexer 2, a splitter 1 extract the control channel $\lambda_c$ from the received WDM signal and feeds it via a control channel receiver 7 to a controller 10. The remainder of the WDM input signal is fed via a delay element 12, which is typically implemented through an optical fiber loop of maybe 200 m length, to the WDM input of WDM waveband demultiplexer 2. The delay element 12 delays the data channels $\lambda_1$-$\lambda_n$ to allow the controller 10 sufficient processing time to process the control channel $\lambda_c$ before the signal channels $\lambda_1$-$\lambda_n$ enter WDM waveband demultiplexer 2.

Controller 10 generates an updated control channel signal, which is fed via a transmitter 8 and a coupler 6 to the pass-through WDM signal that is transmitted at fiber output FO.

The prior art solution presents certain drawbacks.

As illustrated by figure 2, the delay $\Delta t$ introduced by the delay element 12 increases the propagation time $Td$ of the optical data packets. The total processing time of a node is equal to the delay $\Delta t$ plus the time slot duration $T_s$.

Moreover, since the data channels and the control channel need to be aligned at the output of the optical node, the length of the fiber delay line needs to be carefully adjusted/chosen, which increases the complexity of the alignment process.

EP 2 747 324 A1 shows an OADM in which TDM data packets on multiple data wavelengths arrive and a header for all of the packets is contained in the same time slot of a control wavelength.

EP 2 648 352 A1 shows a time slot of a control wavelength contains information about chromatic distortion delay for the data wavelengths.

EP 0 294 133 A2 shows a contention based CSMA system in which a control packet only for one data channel is sent at a random time followed immediately by the packet data for that one particular channel.

**Summary**

The invention provides an optical node comprising an input port suitable for receiving a WDM input signal comprising a plurality of data channels carrying data packets, and a control channel carrying control packets, wherein the data channels as well as the control channel are structured into equidistant timeslots, synchronized over all channels, each data channel carrying one data packet per timeslot, the control packet carried on the control channel on time slot $t_i$ encapsulating a packet header for each data packet carried on one of the data channels on time slot $t_{i+k}$, wherein $k \geq 1$, a controller being configured for disassembling the control packet carried on the control channel on time slot $t_i$, and for disassembling the data packets carried on the data channel on time slot $t_{i+k}$ in function of the packet headers encapsulated in the control packet carried on the control channel on time slot $t_i$.

In embodiments, the packet header of a data packet includes a destination node of the data packet, the controller is configured for extracting from the packet headers encapsulated in the control packet carried on time slot $t_i$ a destination node for each data packet carried on a data channel on time slot $t_{i+k}$, and if said optical node is the destination node of a data packet carried on a data channel on time slot $t_{i+k}$, disassembling the data packet and returning a data stream corresponding to the disassembled data packet that is sent to client terminals.

In embodiments, the optical node further comprises a control packet transmitter, wherein the controller is further configured for, if said node is the destination node of a data packet carried on a data channel on time slot $t_{i+k}$, updating

the control packet carried on time slot $t_i$ so as to erase the packet header of said data packet from the control packet, and sending the updated control packet to the control packet transmitter to be emitted on time slot $t_i$ of the control channel of the WDM output signal, an optical coupler configured for coupling signals emitted by the control packet transmitter into the WDM output signal.

In embodiments, the optical node further comprises, for each of the data channel, a packet blocker configurable to selectively pass or block an individual data packet, and the controller is further configured for, if said node is the destination node of a data packet carried on a data channel on time slot $t_{i+k}$, sending an order to the packet blocker for selectively erasing the data packet from time slot $t_{i+k}$ of the data channel.

In embodiments, the optical node further comprises at least one data packet transmitter, a control packet transmitter, an optical coupler, the controller being further configured for collecting data from client terminals connected to the optical node and placing them into data packets that are sent to the data packet transmitter, the data packet transmitter being configured for converting data packets received from the controller into optical data packets to be emitted on a data channel on time slot $t_{i+k}$, the controller being further configured for including, in the control packet carried on the control channel on time slot $t_i$, a packet header for each data packet to be emitted on a data channel on time slot $t_{i+k}$, the optical coupler being configured for coupling signals emitted by the data packet transmitter(s) and the control packet transmitter into the WDM output signal.

In embodiments, the controller is further configured for sending an order to the data packet transmitter for tuning the data packet transmitter to a carrier wavelength of the data channel of the data packet to be emitted.

In embodiments, the optical node further comprises an optical splitter configured to extract the control channel from the WDM input signal and send it to the controller, a wavelength demultiplexer configured to separate the WDM input signal received at the node input port into demultiplexed signals, each data channel being carried on a demultiplexed signal, an optical splitter for dividing the demultiplexed signals into a first signal sent to a wavelength multiplexer and a second signal sent to the controller, the wavelength multiplexer being configured to multiplex the demultiplexed signals into a WDM output signal outputted at the node output port.

The invention also provides an optical network comprising multiple optical nodes as described above.

The invention also provides a method for controlling an optical node comprising, receiving time slot $t_i$ of a WDM input signal comprising a plurality of data channels carrying data packets, and a control channel carrying control packets, wherein the data channels as well as the control channel are structured into equidistant timeslots, synchronized over all channels, each data channel carrying one packet per timeslot, the control packet carried on the control channel on time slot $t_i$ encapsulates a packet header for each data packet carried on a data channel on time slot $t_{i+k}$, wherein $k \geq 1$, disassembling the control packet carried on the control channel on time slot $t_i$, receiving time slot $t_{i+k}$ of the WDM input signal, disassembling the data packets carried on data channels on time slot $t_{i+k}$ in function of the packel headers encapsulated in the control packet carried on the control channel on time slot $t_i$.

In embodiments, the method further comprises extracting from the packet headers encapsulated in the control packet carried on time slot $t_i$ a destination node for each data packet carried on a data channel on time slot $t_{i+k}$, and if said node is the destination node of a data packet carried on a data channel on time slot $t_{i+k}$, disassembling said data packet carried on a data channel on time slot $t_{i+k}$ and returning a data stream that is sent to client terminals.

In embodiments, the method further comprises, if said node is the destination node of a data packet carried on a data channel on time slot $t_{i+k}$, updating the control packet carried on time slot $t_i$ so as to erase the packet header of said data packet from the control packet, emitting the updated control packet on time slot $t_i$ of the control channel of the WDM output signal.

In embodiments, the method further comprises, if said node is the destination node of a data packet carried on a data channel on time slot $t_{i+k}$, selectively erasing said data packet from time slot $t_{i+k}$ of the data channel.

In embodiments, the method further comprises, collecting data from client terminals connected to the optical node, placing them into data packets to be converted into optical packets and emitted on a data channel of WDM output signal on time slot $t_i$, including, in the control packet carried on the control channel on time slot $t_i$, a packet header for each data packet to be emitted on a data channel on time slot $t_{i+k}$.

The invention also provides a computer program comprising executable code that causes a computer to perform all the steps of a method as described above when executed.

In the invention, the packet header of a data packet is carried one or several time slots ahead of the data packet. The data channels $\lambda_1$-$\lambda_n$ do not need to be delayed to allow the controller sufficient processing time to process the control channel $\lambda_c$ before the signal channels $\lambda_1$-$\lambda_n$ enter WDM waveband demultiplexer 2. The invention therefore significantly reduces the network latency. The invention is particularly efficient to reduce latency in small links optical packet switched rings, for instance in a data center. The invention suppresses the need for delay elements, and thereby reduces the optical fiber length needed and suppresses the need for a complex fiber delay line adjustment.

Brief description of the drawings

These and other aspects of the invention will be apparent from and elucidated with reference to the embodiments described hereinafter, by way of example, with reference to the drawings.

Figure 1 is a functional representation of a node of the prior art.
Figure 2 is a time diagram of the signals emitted by a node and received at a downstream node in the prior art.
Figure 3 is a functional representation of a node in accordance with an embodiment of the invention.
Figure 4 is a time diagram of the signals emitted by a node according to an embodiment of the invention, and received at a downstream node according to an embodiment of the invention<;
Figure 5 is a functional representation of a network in accordance with an embodiment of the invention.

Detailed description of the embodiments

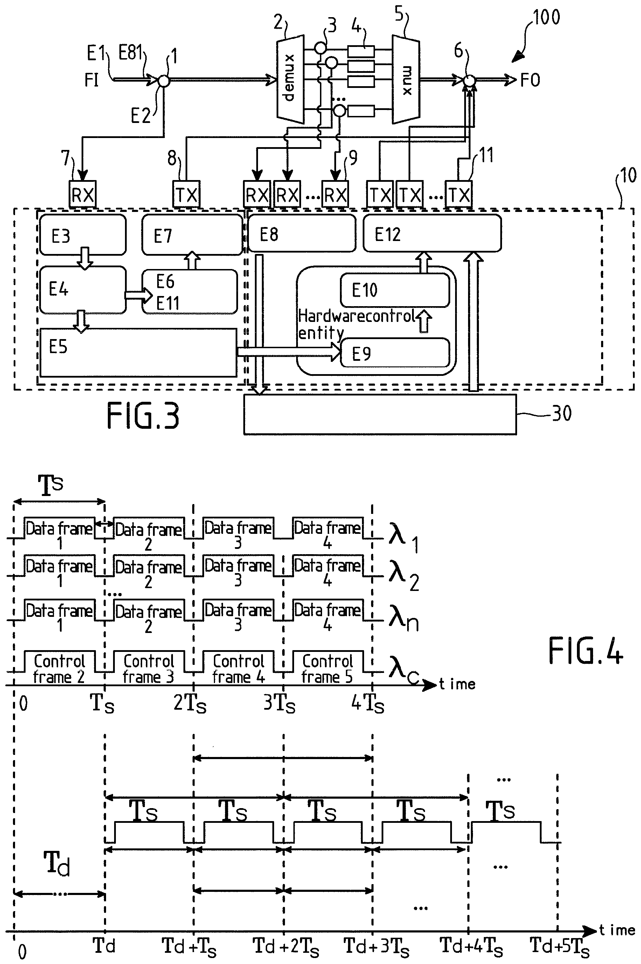

As illustrated by figure 3, a node 100 comprises at least one node input port FI, at least one node output ports FO, a first optical splitter 1, a wavelength demultiplexer 2, a second optical splitter 3, a wavelength multiplexer 5, optical packet receivers 9, and a controller 10.

The input port FI is suitable for receiving a WDM input signal comprising a plurality of data wavelength channels $\lambda_1$-$\lambda_n$ (hereinafter called data channels), and a control wavelength channel $\lambda_c$ (hereinafter called control channel).

The node output ports FO is suitable for passing a WDM output signal.

The control channel $\lambda_c$ carries the signalization needed for the functioning of the network. The control channel $\lambda_c$ is processed electronically at each node.

As illustrated by figure 4, the data channels $\lambda_1$-$\lambda_n$ well as the control channel $\lambda_c$ are structured into equidistant timeslots of equal duration $T_s$, synchronized over all channels, each data channel carrying one packet per timeslot.

The control packet carried on time slot $t_i$ of the control channel includes, for every data channel, the information whether a data packet is carried on time slot $t_{i+k}$, and if a data packet is carried on time slot $t_{i+k}$, a packet header of the data packet. $k$ is an integer equal or superior to 1. The packet header of a data packet contains addressing and other data that is required for the data packet to reach its intended destination. In particular, the packet header of a data packet includes a destination node of the data packet. The packet header may also include the type (unicast, multicast or anycast connection) of the data packet, the Class of Service field (CoS), VLAN/VXLAN tag, or other information relative to the data packet.

The first optical splitter 1 is configured to extract the control channel $\lambda_c$ from the WDM input signal and send it to a control channel receiver 7.

The wavelength demultiplexer 2 is operable to separate the WDM input signal received at the node input port FI into demultiplexed signals, each demultiplexed signal carrying one of the data channels. The WDM waveband demultiplexer 2 is optically connected to the WDM waveband multiplexer 5. The wavelength multiplexer 5 is configured for multiplexing the demultiplexed signals into a WDM output signal outputted at the node output port FO.

The WDM waveband demultiplexer 2 and the WDM waveband multiplexer 5 form an optical pass-through section between the fiber input FI and the fiber output FO, which can transparently pass optical signals that do not need to be dropped.

The second optical splitter 3 divides each demultiplexed signal into a first signal sent to the wavelength multiplexer 5 and a second signal sent to an optical data packet receiver 9.

Optical splitters 1, 3 and 6 can be any type of fiber optic splitter known in the art in particular Fused Biconical Taper (FBT) splitter or Planar Lightwave Circuit (PLC) splitters.

Optical packet receivers 9 are configured to convert optical data packets into electronic data packets and forward them to the controller 10. The controller 10 disassembles the data packets and returns a data stream that is sent to client terminals 30.

The control channel receiver 7 is configured to convert control packets into electronic control packets and forward them to the controller 10. The controller 10 disassembles the control packet to extract the packet headers.

An optical node 100 may further comprise a control channel transmitter 8 for emitting control packets on the control channel of the WDM output signal.

An optical node 100 may further comprise one or more data packet transmitter(s) 11. The controller may collect data from client terminals 30 connected to the node, place them into data packets, and send the data packets to the data packet transmitter(s) 11 to be converted into optical data packets and emitted on the data channels of the WDM output signal.

An optical coupler 6 is configured for coupling signals emitted by the data packet transmitter(s) 11 and the control channel transmitter 8 into the WDM output signal. The optical couplers 6 can be any type of fiber optic coupler known in the art, for example thermally fused fibers.

Packet receivers 9 or packet transmitters 11 may be dedicated to a given data channel and operable to receive/emit packets on only the carrier wavelength associated to said data channel. The packet receivers 9 or packet transmitters 11 may for example be non-coherent transmitters using a filter centered on the associated wavelength.

Alternatively, packet receivers 9 or packet transmitters 11 may be fast tunable to any carrier wavelength. Fast tunable packet receivers 9 or packet transmitters 11 operate on an individual packet time scale, to enable sharing of the packet receivers 9/transmitters 11 between data channels in the course of time. Tunable packet receivers 9 or packet transmitters 11 may for example be coherent receivers/transmitters. Channel selection may for example be performed by adjusting a local oscillator to the desired carrier wavelength.

An optical node 100 may further comprise, for each of the data channel, a packet blocker 4 configurable to selectively pass or block an individual optical data packet carried on the demultiplexed signal. A packet blocker 4 is for example an optical gate, e.g. a Semiconductor Optical amplifier SOA. The packet blockers 4 are arranged between the waveband outputs of WDM waveband demultiplexer 2 and the waveband inputs of WDM waveband multiplexer 5.

The controller 10 includes a memory register containing instructions to be performed on the data channel of the next k time slots.

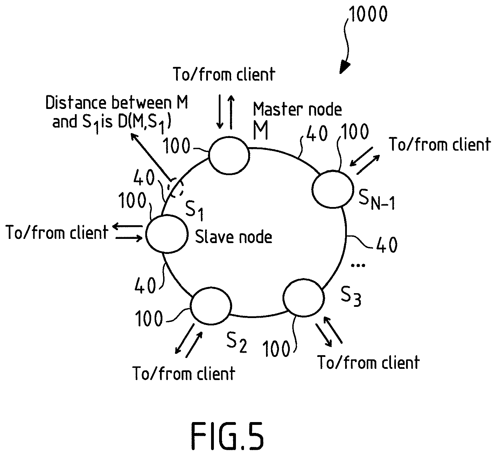

In relation to figure 5, the nodes 100 may be arranged in any optical network 1000 configuration, and in particular in a ring or in a bus configuration. The nodes 100 are connected by optical links 40. An optical link 40 may be an optical fiber, a core of an optical multicore fiber, or a mode of an optical multimode fiber, configured to transmit optical signals in one or both directions.

In particular, as will be described in relation to figure 5, the network 1000 may be a Burst Optical Slot Switching (BOSS) ring also called an Optical Slot Switching (OSS) ring as described for example in D. Chiaroni et al., "Packet OADMs for the next generation of ring networks," Bell Labs Technical Journal, vol. 14, no 4, pp. 263-285, Winter 2010, or in M.A. Mestre, G. de Valicourt, P. Jennevé, H. Mardoyan, S. Bigo, Y. Pointurier, "Optical Slot Switching-Based Datacentres With Elastic Burst-Mode Coherent Transponders", ECOC 2014.

A BOSS ring network includes a node 100, called the master node M, serving as a hub interconnecting the BOSS ring with the exterior network, and slave nodes Si. A unidirectional network will be described. In a bidirectional network synchronization is achieved in a similar way for each direction separately. The master node M controls the synchronization process. The master node Si sends the synchronization information via the control channel, and the slave nodes Si are synchronized over control and data channels, one by one, in the direction of the traffic transmission, in the ring network. The entire network is synchronized after a time that is close to the full network round trip time. In relation to figure 5, the distance between the master node M, and the slave node Si is noted D(M,Si).

Referring back now to figure 3, at a step E1, the node receives WDM input signal time slot $t_i$.

At a step E2, the splitter 2 extracts the control packet carried on time slot $t_i$ from the WDM input signal time slot $t_i$ and sends it to the control channel receiver 7. The control channel receiver 7 converts the optical control packet into an electronic control packet that is sent to the controller 10.

At a step E3, the controller 10 disassembles the control packet carried on time slot $t_i$ of the control channel to extract the packet headers of the data packets carried on time slot $t_{i+k}$

At a step E4, the controller 10 computes the instructions to be performed on the data packets carried on time slot $t_{i+k}$ based on the packet headers extracted from the control packet carried on time slot $t_i$.

At a step E5, the controller 10 stores in its memory the instructions to be performed on the data packets carried on time slot $t_{i+k}$.

In particular, the controller 10 extracts from the control packet carried on time slot $t_i$, the destination node of each data packet carried on time slot $t_{i+k}$.

If the node is the destination node of a data packet carried on time slot $t_{i+k}$, the controller 10 registers in its memory the instruction to disassemble the packet when it will be received.

The controller may also register to selectively erase the packet in order to make room available for another packet.

At a step E6, the controller 10 updates the control packet carried on time slot $t_i$ so as to erase from the control packet the packet header of the data packets that have reached their destination node. The controller 10 assembles the updated control packet and emits, at a step E7, the updated control packet on time slot $t_i$ of the control channel of the WDM output signal.

At a step E81, the node 100 receives time slot $t_{i+k}$ of the WDM input signal.

The splitter 3 extracts the data packets carried on time slot $t_{i+k}$ from time slot $t_{i+k}$ of the WDM input signal and sends them to the optical data channel receiver 9. The data channel receiver 9 converts the optical data packets carried on time slot $t_{i+k}$ into electronic data packets that are sent to the controller 10.

At a step E8 the controller 10 disassembles the received data packets based on the instructions stored in its memory.

In particular, if an instruction to disassemble a data packet carried on time slot $t_{i+k}$ is recorded its memory, the controller 10 disassembles the data packet.

If an instruction to selectively block the data packet was recorded in its memory, the controller instructs at a step E9 the packet blocker 4 to erase the data packet from time slot $t_{i+k}$ of the demultiplexed signal corresponding to the data channel.

The node may emit data traffic. To that end, the controller 10 collects at a step E10 data from client terminals 30 connected to the node, places them into data packets to be converted into optical packets to be emitted on a data channel of the WDM output signal on time slot $t_{i+k}$. The controller includes at a step E11 in the control packet carried on time slot $t_i$, a packet header for each data packet to be emitted on time slot $t_{i+k}$. If the data transmitter 11 is a tunable transmitter, the controller 10 sends at a step E12 an order to the packet transmitter 11 for tuning the packet transmitter 11 to the carrier wavelength of the data channel of the packet to be emitted.

The first control packet emitted by a master node on timeslot $t_0$ must include the packet headers of the data packets that will be emitted on time slot $t_k$. The master node M may start emitting data packet at time slot $t_k$.

A slave nodes Si may start emitting data packets after he has received the first control packet carried on time slot $t_0$. A slave node Si may start emitting data packet at time slot $\left\lceil \frac{D(M,S_i)/c+\Delta t}{T_S} \right\rceil +1,$ where $D(M,S_i)$ is the physical distance between the master node M and the slave node Si, c is the light propagation speed in the optical fiber and $\Delta t$ is the control channel processing time.

The entire ring will be fully operational and synchronized starting from the time slot $\left\lceil \frac{D(M,S_{N-1})/c+\Delta t}{T_S} \right\rceil + 1,$ where $S_{N-1}$ is the farthest downstream slave node (when observed from the position of the master node), in a BOSS ring.

As illustrated by figure 4, the propagation time $Td$ of the optical data packets is reduced. As a consequence the latency is reduced in the network.

The maximum number of nodes in the network depends on the ratio between the time slot duration $T_S$ and time of control channel processing $\Delta t$. This is called the accumulated delay effect.

In a first embodiment, the network includes a hub and only includes N optical nodes without delay lines. The maximum number of nodes is $\left\lfloor \frac{k*T_S}{\Delta t} \right\rfloor$. The latency savings are $\frac{\left| 2(N-1)*\frac{N-1}{2}\Delta t - 0 \right|}{2(N-1)*\frac{N-1}{2}\Delta t} * 100[\%] = 100\%.$

In a second embodiment, the network includes a hub and N optical nodes without delay lines and x nodes with delay lines of delay $\Delta t$, wherein $x \leq N$. The maximum number of nodes is $x + \left\lfloor \frac{k*T_S}{\Delta t} \right\rfloor$. The ring size is increased (thanks to presence of some Fiber Delay Lines), but the latency savings are decreased. Delay is needed to compensate for the accumulated delay at the master node. In the case of a ring network including a hub, the latency savings are

$$\frac{\left| 2(N-1)*\frac{N-1}{2}\Delta t - 2(N-1)*\frac{x}{2}\Delta t \right|}{2(N-1)*\frac{N-1}{2}\Delta t} * 100[\%] = \frac{|N-1-x|}{N-1} * 100[\%] \text{ (between 0 and 100\%)}.$$

In a third embodiment, Delay Lines are eliminated from all network nodes, except from the master node. The master node has a Delay Line of delay $N*\Delta t$. The maximum number of nodes is $\left\lfloor \frac{k*T_S}{\Delta t} \right\rfloor$. The latency savings are

$$\frac{\left| 2(N-1)*\frac{N-1}{2}\Delta t - 0 \right|}{2(N-1)*\frac{N-1}{2}\Delta t} * 100[\%] = 100\% \text{ in a concentration distribution traffic (dominant for Hub \& spoke metro}$$

architecture), and in a fronthaul scenario, and $\frac{\left| N(N-1)*\frac{N}{2}\Delta t - \frac{(N-2)(N-1)}{2}*N\Delta t \right|}{N(N-1)*\frac{N}{2}\Delta t} * 100[\%] \approx 0\%$ in peer-to-peer traffic (uniform and symmetric traffic). The achieved savings depend on ratio of different traffic profiles in total network traffic. In metropolitan area network and fronthaul the concentration/distribution traffic is dominant.

In a fourth embodiment, x nodes in the network have a delay line of delay $\Delta t$, and the master node has a delay line of delay $(N-x)*\Delta t$, wherein $x \leq N$. The maximum number of nodes is $x + \left\lfloor \frac{k*T_S}{\Delta t} \right\rfloor$. In this embodiment the ring size is increased, but latency savings are decreased. The latency savings are

$$\frac{\left|2(N-1)*\frac{N-1}{2}\Delta t - 2(N-1)*\frac{x}{2}\Delta t\right|}{2(N-1)*\frac{N-1}{2}\Delta t} * 100[\%] = \frac{|N-1-x|}{N-1} * 100[\%]$$ *(between 0 and 100%)* in a concentration distribution traffic, and in a fronthaul scenario, and $$\frac{\left|N(N-1)*\frac{N-x}{2}\Delta t - \frac{(N-2)(N-1)}{2}*(N-x)\Delta t\right|}{N(N-1)*\frac{N}{2}\Delta t} * 100[\%] \approx 0\%$$ in peer-to-peer traffic (uniform and symmetric traffic). The achieved savings depend on ratio of different traffic profiles in total network traffic. In metropolitan area network and fronthaul the concentration/distribution traffic is dominant.

Elements such as the controller 10 may be implemented in different manners. The methods described hereinabove may be executed through the use of dedicated hardware as well as hardware capable of executing software in association with appropriate software. When provided by a processor, the corresponding functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read-only memory (ROM) for storing software, random access memory (RAM), and non-volatile storage. Other hardware, conventional and/or custom, may also be included.

The invention is not limited to the described embodiments. The appended claims are to be construed as embodying all modification and alternative constructions that may be occurred to one skilled in the art, which fairly fall within the basic teaching here, set forth.

The use of the verb "to comprise" or "to include" and its conjugations does not exclude the presence of elements or steps other than those stated in a claim. Furthermore, the use of the article "a" or "an" preceding an element or step does not exclude the presence of a plurality of such elements or steps. The invention may be implemented by means of hardware as well as software. The same item of hardware may represent several "means".

In the claims, any reference signs placed between parentheses shall not be construed as limiting the scope of the claims.

## Claims

1.    Optical node (100) comprising:

an input port (FI) suitable for receiving a WDM input signal comprising a plurality of data channels ($\lambda_1$-$\lambda_n$) carrying data packets, and a control channel ($\lambda_c$) carrying control packets, **characterised in that** the data channels ($\lambda_1$-$\lambda_n$) as well as the control channel ($\lambda_c$) are structured into equidistant timeslots, synchronized over all channels, each data channel carrying one data packet per timeslot, the control packet carried on the control channel on time slot $t_i$ encapsulating a packet header for each data packet carried on one of the data channels on time slot $t_{i+k}$, wherein $k \geq 1$,
a controller (10) being configured for disassembling the control packet carried on the control channel on time slot $t_i$, and for disassembling the data packets carried on the data channel on time slot $t_{i+k}$ in function of the packet headers encapsulated in the control packet carried on the control channel on time slot $t_i$.

2.    Optical node (100) according to claim 1, wherein the packet header of a data packet includes a destination node of the data packet,
the controller (10) being configured for extracting from the packet headers encapsulated in the control packet carried on time slot $t_i$ a destination node for each data packet carried on a data channel on time slot $t_{i+k}$, and if said optical node is the destination node of a data packet carried on a data channel on time slot $t_{i+k}$, disassembling the data packet and returning a data stream corresponding to the disassembled data packet that is sent to client terminals (30).

3.    Optical node (100) according to claim 2, further comprising a control packet transmitter (8),
wherein the controller (10) is further configured for, if said node is the destination node of a data packet carried on a data channel on time slot $t_{i+k}$, updating the control packet carried on time slot $t_i$ so as to erase the packet header of said data packet from the control packet, and sending the updated control packet to the control packet transmitter (8) to be emitted on time slot $t_i$ of the control channel of the WDM output signal,
an optical coupler (6) configured for coupling signals emitted by the control packet transmitter (8) into the WDM output signal.

4. Optical node (100) according to claim 3, further comprising,
for each of the data channel, a packet blocker (4) configurable to selectively pass or block an individual data packet, wherein the controller (10) is further configured for, if said node is the destination node of a data packet carried on a data channel on time slot $t_{i+k}$, sending an order to the packet blocker (4) for selectively erasing the data packet from time slot $t_{i+k}$ of the data channel.

5. Optical node (100) according to any of claims 1 to 4, further comprising at least one data packet transmitter (11),
a control packet transmitter (8),
an optical coupler (6),
the controller (10) being further configured for collecting data from client terminals (30) connected to the optical node (100) and placing them into data packets that are sent to the data packet transmitter (11),
the data packet transmitter (11) being configured for converting data packets received from the controller (10) into optical data packets to be emitted on a data channel on time slot $t_{i+k}$,
the controller (10) being further configured for including, in the control packet carried on the control channel on time slot $t_i$, a packet header for each data packet to be emitted on a data channel on time slot $t_{i+k}$,
the optical coupler (6) being configured for coupling signals emitted by the data packet transmitter(s) (11) and the control packet transmitter (8) into the WDM output signal.

6. Optical node (100) according to claim 5, wherein the controller (10) is further configured for sending an order to the data packet transmitter (11) for tuning the data packet transmitter (11) to a carrier wavelength of the data channel of the data packet to be emitted.

7. Optical node (100) according to any one of claims 1 to 6, further comprising
an optical splitter (1) configured to extract the control channel ($\lambda_c$) from the WDM input signal and send it to the controller (10);
a wavelength demultiplexer (2) configured to separate the WDM input signal received at the node input port (FO) into demultiplexed signals, each data channel ($\lambda_1$-$\lambda_n$) being carried on a demultiplexed signal;
an optical splitter (3) for dividing the demultiplexed signals into a first signal sent to a wavelength multiplexer (5) and a second signal sent to the controller (10);
the wavelength multiplexer (5) being configured to multiplex the demultiplexed signals into a WDM output signal outputted at the node output port (FO).

8. Optical network (100), comprising multiple optical nodes (100) according to any of claims 1 to 7.

9. Method for controlling an optical node (100) comprising:

(E1) receiving time slot $t_i$ of a WDM input signal comprising a plurality of data channels ($\lambda_1$-$\lambda_n$) carrying data packets, and a control channel ($\lambda_c$) carrying control packets, **characterised in that** the data channels ($\lambda_1$-$\lambda_n$) as well as the control channel ($\lambda_c$) are structured into equidistant timeslots, synchronized over all channels, each data channel carrying one packet per timeslot, the control packet carried on the control channel on time slot $t_i$ encapsulates a packet header for each data packet carried on a data channel on time slot $t_{i+k}$, wherein $k \geq 1$,
(E3) disassembling the control packet carried on the control channel on time slot $t_i$, (E81) receiving time slot $t_{i+k}$ of the WDM input signal
(E8) disassembling the data packets carried on data channels on time slot $t_{i+k}$ in function of the packet headers encapsulated in the control packet carried on the control channel on time slot $t_i$.

10. Method according to claim 9, further comprising (E3) extracting from the packet headers encapsulated in the control packet carried on time slot $t_i$ a destination node for each data packet carried on a data channel on time slot $t_{i+k}$, and if said node is the destination node of a data packet carried on a data channel on time slot $t_{i+k}$, (E8) disassembling said data packet carried on a data channel on time slot $t_{i+k}$ and returning a data stream that is sent to client terminals (30).

11. Method according to claim 9 or 10, further comprising, if said node is the destination node of a data packet carried on a data channel on time slot $t_{i+k}$,
(E6) updating the control packet carried on time slot $t_i$ so as to erase the packet header of said data packet from the control packet,
(E7) emitting the updated control packet on time slot $t_i$ of the control channel of the WDM output signal.

**12.** Method according to claim 10 or 11, further comprising, if said node is the destination node of a data packet carried on a data channel on time slot $t_{i+k}$, (E9) selectively erasing said data packet from time slot $t_{i+k}$ of the data channel.

**13.** Method according to any of claims 9 to 12, further comprising,

(E10) collecting data from client terminals connected to the optical node (100), placing them into data packets to be converted into optical packets and emitted on a data channel of WDM output signal on time slot $t_i$,

(E11) including, in the control packet carried on the control channel on time slot $t_i$, a packet header for each data packet to be emitted on a data channel on time slot $t_{i+k}$.

**14.** A computer program comprising executable code that causes a computer to perform all the steps of a method in accordance with any one of claims 9 to 13 when executed.

**Patentansprüche**

**1.** Optischer Knoten (100), umfassend:

einen Eingangsanschluss (FI), der geeignet ist, ein WDM-Eingangssignal zu empfangen, das mehrere Datenkanäle ($\lambda_1$-$\lambda_n$), die Datenpakete tragen, und einen Steuerkanal ($\lambda_c$), der Steuerpakete trägt, umfasst, **dadurch gekennzeichnet, dass**
die Datenkanäle ($\lambda_1$-$\lambda_n$) sowie der Steuerkanal ($\lambda_c$) in äquidistanten Zeitschlitzen strukturiert sind, die über alle Kanäle synchronisiert sind, wobei jeder Datenkanal ein Datenpaket pro Zeitschlitz trägt, wobei das auf dem Steuerkanal im Zeitschlitz t; getragene Steuerpaket einen Paket-Header für jedes auf einem der Datenkanäle im Zeitschlitz $t_{i+k}$ getragene Datenpaket kapselt, wobei k $\geq$ 1 ist,
einen Controller (10), der konfiguriert ist, das auf dem Steuerkanal im Zeitschlitz t; getragene Steuerpaket zu disassemblieren und die auf dem Datenkanal im Zeitschlitz $t_{i+k}$ getragenen Datenpakete in Abhängigkeit von den Paket-Headers, die in dem auf dem Steuerkanal im Zeitschlitz t; getragenen Steuerpaket gekapselt sind, zu disassemblieren.

**2.** Optischer Knoten (100) nach Anspruch 1, wobei der Paket-Header eines Datenpakets einen Zielknoten des Datenpakets aufweist,
wobei der Controller (10) konfiguriert ist, aus den Paket-Headers, die in dem im Zeitschlitz t; getragenen Steuerpaket gekapselt sind, einen Zielknoten für jedes auf einem Datenkanal im Zeitschlitz $t_{i+k}$ getragene Datenpaket zu extrahieren, und wenn der optische Knoten der Zielknoten eines auf einem Datenkanal im Zeitschlitz $t_{i+k}$ getragenen Datenpakets ist, das Datenpaket zu disassemblieren, und einen Datenstrom zurückzusenden, der dem disassemblierten Datenpaket entspricht, das an Client-Endgeräte (30) gesendet wird.

**3.** Optischer Knoten (100) nach Anspruch 2, ferner umfassend
einen Steuerpaketsender (8),
wobei der Controller (10) ferner konfiguriert ist, wenn der Knoten der Zielknoten eines auf einem Datenkanal im Zeitschlitz $t_{i+k}$ getragenen Datenpakets ist, das im Zeitschlitz t; getragene Steuerpaket zu aktualisieren, um so den Paket-Header des Datenpakets aus dem Steuerpaket zu löschen, und das aktualisierte Steuerpaket an den Steuerpaketsender (8) zu senden, um in dem Zeitschlitz $t_i$ des Steuerkanals des WDM-Ausgangssignals emittiert zu werden,
einen Optokoppler (6), der konfiguriert ist, Signale, die von dem Steuerpaket-Sender (8) emittiert werden, in das WDM-Ausgangssignal einzukoppeln.

**4.** Optischer Knoten (100) nach Anspruch 3, ferner umfassend, für jeden der Datenkanäle, einen Paketblockierer (4), der konfigurierbar ist, ein einzelnes Datenpaket selektiv durchzulassen oder zu blockieren,
wobei der Controller (10) ferner konfiguriert ist, wenn der Knoten der Zielknoten eines auf einem Datenkanal im Zeitschlitz $t_{i+k}$ getragenen Datenpakets ist, einen Befehl an den Paketblockierer (4) zum selektiven Löschen des Datenpakets vom Zeitschlitz $t_{i+k}$ des Datenkanals zu senden.

**5.** Optischer Knoten (100) nach einem der Ansprüche 1 bis 4, ferner umfassend mindestens einen Datenpaketsender (11),
einen Steuerpaketsender (8),
einen Optokoppler (6),
wobei der Controller (10) ferner konfiguriert ist, Daten von mit dem optischen Knoten (100) verbundenen Client-Endgeräten (30) zu sammeln und sie in Datenpaketen zu platzieren, die an den Datenpaketsender (11) gesendet werden,

wobei der Datenpaketsender (11) konfiguriert ist, von dem Controller (10) empfangene Datenpakete in optische Datenpakete umzuwandeln, die auf einem Datenkanal im Zeitschlitz $t_{i+k}$ emittiert werden sollen,

wobei der Controller (10) ferner konfiguriert ist, in das auf dem Steuerkanal im Zeitschlitz $t_i$ getragene Steuerpaket einen Paket-Header für jedes auf einem Datenkanal im Zeitschlitz $t_{i+k}$ zu emittierende Datenpaket aufzunehmen,

wobei der Optokoppler (6) konfiguriert ist, von dem/den Datenpaketsender(n) (11) und dem Steuerpaketsender (8) emittierte Signale in das WDM-Ausgangssignal einzukoppeln.

6. Optischer Knoten (100) nach Anspruch 5, wobei der Controller (10) ferner konfiguriert ist, einen Befehl an den Datenpaketsender (11) zu senden, um den Datenpaketsender (11) auf eine Trägerwellenlänge des Datenkanals des zu emittierenden Datenpakets abzustimmen.

7. Optischer Knoten (100) nach einem der Ansprüche 1 bis 6, ferner umfassend einen optischen Teiler (1), der konfiguriert ist, den Steuerkanal ($\lambda_c$) aus dem WDM-Eingangssignal zu extrahieren und ihn an den Controller (10) zu senden;

einen Wellenlängen-Demultiplexer (2), der konfiguriert ist, das am Knoteneingangsanschluss (FO) empfangene WDM-Eingangssignal in demultiplexierte Signale zu trennen, wobei jeder Datenkanal ($\lambda_1$-$\lambda_n$) auf einem demultiplexierten Signal getragen wird;

einen optischen Teiler (3) zum Teilen der demultiplexierten Signale in ein erstes Signal, das an einen Wellenlängen-Multiplexer (5) gesendet wird, und ein zweites Signal, das an den Controller (10) gesendet wird;

wobei der Wellenlängen-Multiplexer (5) konfiguriert ist, die demultiplexierten Signale in ein WDM-Ausgangssignal zu multiplexieren, das am Knotenausgangsanschluss (FO) ausgegeben wird.

8. Optisches Netzwerk (100), umfassend mehrere optische Knoten (100) nach einem der Ansprüche 1 bis 7.

9. Verfahren zur Steuerung eines optischen Knotens (100), umfassend:

(E1) Empfangen eines Zeitschlitzes $t_i$ eines WDM-Eingangssignals, das mehrere Datenkanälen ($\lambda_1$-$\lambda_n$), die Datenpakete tragen, und einen Steuerkanal ($\lambda_c$), der Steuerpakete trägt, umfasst, **dadurch gekennzeichnet, dass**

die Datenkanäle ($\lambda_1$-$\lambda_n$) sowie der Steuerkanal ($\lambda_c$) in äquidistante Zeitschlitze strukturiert sind, die über alle Kanäle synchronisiert sind, wobei jeder Datenkanal ein Paket pro Zeitschlitz trägt und das auf dem Steuerkanal im Zeitschlitz $t_i$ getragene Steuerpaket einen Paket-Header für jedes auf einem Datenkanal im Zeitschlitz $t_{i+k}$ getragene Datenpaket kapselt, wobei k $\geq$ 1 ist,

(E3) Disassemblieren des auf dem Steuerkanal im Zeitschlitz $t_i$ getragenen Steuerpakets,

(E81) Empfangen des Zeitschlitzes $t_{i+k}$ des WDM-Eingangssignals,

(E8) Disassemblieren der auf Datenkanälen im Zeitschlitz $t_{i+k}$ getragenen Datenpakete in Abhängigkeit von den Paket-Headers, die in dem auf dem Steuerkanal im Zeitschlitz $t_i$ getragenen Steuerpaket gekapselt sind.

10. Verfahren nach Anspruch 9, ferner umfassend (E3) Extrahieren aus den Paket-Headers, die in dem im Zeitschlitz $t_i$ getragenen Steuerpaket gekapselt sind, eines Zielknotens für jedes auf einem Datenkanal im Zeitschlitz $t_{i+k}$ getragene Datenpaket, und wenn der Knoten der Zielknoten eines auf einem Datenkanal im Zeitschlitz $t_{i+k}$ getragen Datenpakets ist, (E8) Disassemblieren des auf einem Datenkanal im Zeitschlitz $t_{i+k}$ getragenen Datenpakets, und Zurücksenden eines Datenstroms, der an Client-Endgeräte (30) gesendet wird.

11. Verfahren nach Anspruch 9 oder 10, ferner umfassend, wenn der Knoten der Zielknoten eines auf einem Datenkanal im Zeitschlitz $t_{i+k}$ getragenen Datenpakets ist,

(E6) Aktualisieren des im Zeitschlitz $t_i$ getragenen Steuerpakets, um den Paket-Header des Datenpakets aus dem Steuerpaket zu löschen,

(E7) Emittieren des aktualisierten Steuerpakets im Zeitschlitz $t_i$ des Steuerkanals des WDM-Ausgangssignals.

12. Verfahren nach Anspruch 10 oder 11, ferner umfassend, wenn der Knoten der Zielknoten eines auf einem Datenkanal im Zeitschlitz $t_{i+k}$ getragenen Datenpakets ist, (E9) selektives Löschen des Datenpakets aus dem Zeitschlitz $t_{i+k}$ des Datenkanals.

13. Verfahren nach einem der Ansprüche 9 bis 12, ferner umfassend
(E10) Sammeln von Daten von mit dem optischen Knoten (100) verbundenen Client-Endgeräten, Platzieren dieser in Datenpakete, um in optische Pakete umgewandelt und auf einem Datenkanal des WDM-Ausgangssignals im Zeitschlitz $t_i$ emittiert zu werden,

(E11) Aufnehmen, in das auf dem Steuerkanal im Zeitschlitz $t_i$ getragene Steuerpaket, eines Paket-Headers für jedes auf einem Datenkanal im Zeitschlitz $t_{i+k}$ zu emittierende Datenpaket.

14. Computerprogramm, umfassend ausführbaren Code, der, wenn er ausgeführt wird, einen Computer veranlasst, alle Schritte eines Verfahrens nach einem der Ansprüche 9 bis 13 durchzuführen.

**Revendications**

1. Noeud optique (100) comprenant :

   un port d'entrée (FI) propre à recevoir un signal d'entrée WDM comprenant une pluralité de canaux de données ($\lambda_1$-$\lambda_n$) transportant des paquets de données, et un canal de contrôle ($\lambda_c$) transportant des paquets de contrôle, **caractérisé en ce que**
   les canaux de données ($\lambda_1$-$\lambda_n$) ainsi que le canal de contrôle ($\lambda_c$) sont structurés en intervalles de temps équidistants, synchronisés sur tous les canaux, chaque canal de données transportant un paquet de données par intervalle de temps, le paquet de contrôle transporté sur le canal de contrôle sur l'intervalle de temps $t_i$ encapsulant un en-tête de paquet pour chaque paquet de données transporté sur un des canaux de données sur l'intervalle de temps $t_{i+k}$, où $k \geq 1$,
   un contrôleur (10) étant configuré pour désassembler le paquet de contrôle transporté sur le canal de contrôle sur l'intervalle de temps $t_i$, et pour désassembler les paquets de données transportés sur le canal de données sur l'intervalle de temps $t_{i+k}$ en fonction des en-têtes de paquet encapsulés dans le paquet de contrôle transporté sur le canal de contrôle sur l'intervalle de temps $t_i$.

2. Noeud optique (100) selon la revendication 1, dans lequel l'en-tête de paquet d'un paquet de données comporte un noeud de destination du paquet de données,
   le contrôleur (10) étant configuré pour extraire, des en-têtes de paquet encapsulés dans le paquet de contrôle transporté sur l'intervalle de temps $t_i$, un noeud de destination pour chaque paquet de données transporté sur un canal de données sur l'intervalle de temps $t_{i+k}$, et si ledit noeud optique est le noeud de destination d'un paquet de données transporté sur un canal de données sur l'intervalle de temps $t_{i+k}$, désassembler le paquet de données et retourner un courant de données correspondant au paquet de données désassemblé qui est envoyé à des terminaux clients (30).

3. Noeud optique (100) selon la revendication 2, comprenant en outre
   un émetteur de paquet de contrôle (8),
   le contrôleur (10) étant également configuré pour, si ledit noeud est le noeud de destination d'un paquet de données transporté sur un canal de données sur l'intervalle de temps $t_{i+k}$, actualiser le paquet de contrôle transporté sur l'intervalle de temps $t_i$ de manière à effacer l'en-tête de paquet dudit paquet de données du paquet de contrôle, et envoyer le paquet de contrôle actualisé à l'émetteur de paquet de contrôle (8) pour qu'il soit émis sur l'intervalle de temps $t_i$ du canal de contrôle du signal de sortie WDM,
   un coupleur optique (6) configuré pour coupler des signaux émis par l'émetteur de paquet de contrôle (8) dans le signal de sortie WDM.

4. Noeud optique (100) selon la revendication 3, comprenant en outre
   pour chacun des canaux de données, un bloqueur de paquet (4) configurable pour laisser passer ou bloquer sélectivement un paquet de données individuel,
   le contrôleur (10) étant également configuré pour, si ledit noeud est le noeud de destination d'un paquet de données transporté sur un canal de données sur l'intervalle de temps $t_{i+k}$, envoyer un ordre au bloqueur de paquet (4) pour effacer sélectivement le paquet de données de l'intervalle de temps $t_{i+k}$ du canal de données.

5. Noeud optique (100) selon l'une quelconque des revendications 1 à 4, comprenant en outre
   au moins un émetteur de paquet de données (11),
   un émetteur de paquet de contrôle (8),
   un coupleur optique (6),
   le contrôleur (10) étant également configuré pour collecter des données provenant de terminaux clients (30) connectés au noeud optique (100) et les placer dans des paquets de données qui sont envoyés à l'émetteur de paquet de données (11),

l'émetteur de paquet de données (11) étant configuré pour convertir des paquets de données reçus depuis le contrôleur (10) en paquets de données optiques devant être émis sur un canal de données sur l'intervalle de temps $t_{i+k}$,

le contrôleur (10) étant également configuré pour insérer, dans le paquet de contrôle transporté sur le canal de contrôle sur l'intervalle de temps $t_i$, un en-tête de paquet pour chaque paquet de données devant être émis sur un canal de données sur l'intervalle de temps $t_{i+k}$,

le coupleur optique (6) étant configuré pour coupler des signaux émis par le ou les émetteurs de paquet de données (11) et l'émetteur de paquet de contrôle (8) dans le signal de sortie WDM.

6. Noeud optique (100) selon la revendication 5, dans lequel le contrôleur (10) est également configuré pour envoyer un ordre à l'émetteur de paquet de données (11) pour régler l'émetteur de paquet de données (11) sur une longueur d'onde de porteuse du canal de données du paquet de données devant être émis.

7. Noeud optique (100) selon l'une quelconque des revendications 1 à 6, comprenant en outre un séparateur optique (1) configuré pour extraire le canal de contrôle ($\lambda_c$) du signal d'entrée WDM et l'envoyer au contrôleur (10) ;

un démultiplexeur en longueur d'onde (2) configuré pour séparer le signal d'entrée WDM reçu au port d'entrée (FO) du noeud en signaux démultiplexés, chaque canal de données ($\lambda_1$-$\lambda_n$) étant transporté sur un signal démultiplexé ;

un séparateur optique (3) destiné à diviser les signaux démultiplexés en un premier signal envoyé à un multiplexeur en longueur d'onde (5) et un deuxième signal envoyé au contrôleur (10) ;

le multiplexeur en longueur d'onde (5) étant configuré pour multiplexer les signaux démultiplexés dans un signal de sortie WDM délivré au port de sortie (FO) du noeud.

8. Réseau optique (100), comprenant de multiples noeuds optiques (100) selon l'une quelconque des revendications 1 à 7.

9. Procédé de contrôle d'un noeud optique (100) comprenant :

(EI) la réception d'un intervalle de temps $t_i$ d'un signal d'entrée WDM comprenant une pluralité de canaux de données ($\lambda_1$-$\lambda_n$) transportant des paquets de données, et un canal de contrôle ($\lambda_c$) transportant des paquets de contrôle, **caractérisé en ce que**

les canaux de données ($\lambda_1$-$\lambda_n$) ainsi que le canal de contrôle ($\lambda_c$) sont structurés en intervalles de temps équidistants, synchronisés sur tous les canaux, chaque canal de données transportant un paquet par intervalle de temps, le paquet de contrôle transporté sur le canal de contrôle sur l'intervalle de temps $t_i$ encapsule un en-tête de paquet pour chaque paquet de données transporté sur un canal de données sur l'intervalle de temps $t_{i+k}$, où $k \geq 1$,

(E3) le désassemblage du paquet de contrôle transporté sur le canal de contrôle sur l'intervalle de temps $t_i$,

(E81) la réception de l'intervalle de temps $t_{i+k}$ du signal d'entrée WDM,

(E8) le désassemblage des paquets de données transportés sur des canaux de données sur l'intervalle de temps $t_{i+k}$ en fonction des en-têtes de paquet encapsulés dans le paquet de contrôle transporté sur le canal de contrôle sur l'intervalle de temps $t_i$.

10. Procédé selon la revendication 9, comprenant en outre (E3) l'extraction, des en-têtes de paquet encapsulés dans le paquet de contrôle transporté sur l'intervalle de temps $t_i$, d'un noeud de destination pour chaque paquet de données transporté sur un canal de données sur l'intervalle de temps $t_{i+k}$, et si ledit noeud est le noeud de destination d'un paquet de données transporté sur un canal de données sur l'intervalle de temps $t_{i+k}$, (E8) le désassemblage dudit paquet de données transporté sur un canal de données sur l'intervalle de temps $t_{i+k}$ et le retour d'un courant de données qui est envoyé à des terminaux clients (30).

11. Procédé selon la revendication 9 ou 10, comprenant en outre, si ledit noeud est le noeud de destination d'un paquet de données transporté sur un canal de données sur l'intervalle de temps $t_{i+k}$,

(E6) l'actualisation du paquet de contrôle transporté sur l'intervalle de temps $t_i$ de manière à effacer l'en-tête de paquet dudit paquet de données du paquet de contrôle,

(E7) l'émission du paquet de contrôle actualisé sur l'intervalle de temps $t_i$ du canal de contrôle du signal de sortie WDM.

12. Procédé selon la revendication 10 ou 11, comprenant en outre, si ledit noeud est le noeud de destination d'un paquet de données transporté sur un canal de données sur l'intervalle de temps $t_{i+k}$,

(E9) l'effacement sélectif dudit paquet de données de l'intervalle de temps $t_{i+k}$ du canal de données.

13. Procédé selon l'une quelconque des revendications 9 à 12, comprenant en outre

(E10) la collecte de données provenant de terminaux clients connectés au noeud optique (100), leur positionnement dans des paquets de données devant être convertis en paquets optiques et émis sur un canal de données de signal de sortie WDM sur l'intervalle de temps $t_i$,

(E11) l'insertion, dans le paquet de contrôle transporté sur le canal de contrôle sur l'intervalle de temps $t_i$, d'un entête de paquet pour chaque paquet de données devant être émis sur un canal de données sur l'intervalle de temps $t_{i+k}$.

14. Programme informatique comprenant un code exécutable qui conduit un ordinateur à effectuer toutes les étapes d'un procédé selon l'une quelconque des revendications 9 à 13 lorsqu'il est exécuté.

FIG.1

FIG.2

FIG.3

FIG.4

FIG.5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 2747324 A1
- EP 2648352 A1
- EP 0294133 A2

### Non-patent literature cited in the description

- Packet OADMs for the next generation of ring networks. **D. CHIARONI et al.** Bell Labs Technical Journal. Winter, 2010, vol. 14, 263-285
- **M.A. MESTRE ; G. DE VALICOURT ; P. JENNEVÉ ; H. MARDOYAN ; S. BIGO ; Y. POINTURIER.** Optical Slot Switching-Based Datacentres With Elastic Burst-Mode Coherent Transponders. *ECOC,* 2014